# EUROPÄISCHE PATENTSCHRIFT

(11) **EP 2 653 857 B1**
(45) Veröffentlichungstag und Bekanntmachung des Hinweises auf die Patenterteilung: **30.05.2018**
(21) Anmeldenummer: 13001707.2
(22) Anmeldetag: 04.04.2013
(51) Int. Cl.: G01N 21/53, G01F 1/00, G01F 15/00

(54) **Trübungssensor sowie Durchflusszähler für Fluid**
Turbidity sensor and flow meter for fluid
Capteur de turbidité et débitmètre pour fluide

(30) Priorität: 19.04.2012 DE 102012007864
(43) Veröffentlichungstag der Anmeldung: 23.10.2013
(73) Patentinhaber: Diehl Metering GmbH, 91522 Ansbach (DE)
(72) Erfinder: Hahn, Andreas, 91560 Heilsbronn (DE); Zellner, Claus, 91522 Ansbach (DE)
(74) Vertreter: Diehl Patentabteilung

(56) Entgegenhaltungen:
- EP-A1- 0 980 046
- DE-A1- 4 233 218
- JP-A- 2000 121 548
- US-A1- 2006 061 765
- US-B1- 7 659 980

## Beschreibung

Die vorliegende Erfindung betrifft einen Trübungssensor gemäß dem Oberbegriff des Anspruchs 1 sowie einem Durchflusszähler für Fluid gemäß dem Oberbegriff des Anspruchs 14.

### Technologischer Hintergrund

Ein Trübungssensor ist ein Messgerät, mit dem der Anteil von partikulären Feststoffen oder Gasbläschen in einer Flüssigkeit bestimmt werden kann. Die Trübungsmessung ist zum Beispiel Teil der Untersuchung im Rahmen der Trinkwasserverordnung oder bei der Bierherstellung zur Messung der Hefemenge oder bei der Verarbeitung von Milch in Molkereien. Trübungssensoren sind entweder als Inline-Geräte für den Einbau in Rohrleitungssystemen gedacht oder werden als Solitärgeräte eingesetzt.

Speziell bei Trinkwasser gilt es den in der Trinkwasserverordnung festgelegten Grenzwert von 1 NTU (Nephelometric Turbidity Unit) zu überwachen. Geräte für eine Messung im durchflossenen System (Inline-Messgeräte) werden in der Regel im sogenannten Vierstrahl-Wechsellichtverfahren ausgeführt. Dabei wird bei kleineren Nennweiten die Konstruktion dahingehend ausgelegt, dass sich die Fotodetektoren an der Rohrleitungswand befinden und so die Strömung nicht beeinflussen. Mit größer werdenden Nennweiten kommen Tauchsonden zum Einsatz.

Aus der DE 43 34 208 A1 ist ein Streulichtphotometer bekannt, welches nach dem Vierstrahl-Wechsellichtverfahren arbeitet. Zu diesem Zweck sind umfänglich um den Strömungskanal herum einerseits Lichtquellen, andererseits Photoempfänger angeordnet. Die Lichtquellen- sowie Photoempfänger stören somit die Strömung nicht.

Aus der DE 10 2008 022 372 A1 ist eine Vorrichtung zur Trübungsmessung mit einer Sonde bekannt, deren Sondenkopf während der Messung von dem Messmedium umgeben ist. Im Sondenkopf sind mindestens ein erster Lichtsender sowie ein erster Lichtempfänger vorgesehen. Die vom Lichtempfänger aufgenommene Lichtintensität ist ein Maß für die Bestimmung des Trübungsgrades.

Die DE 197 17 287 C1 offenbart einen Trübungssensor, bei welchem Sender und Empfänger parallel ausgerichtet angeordnet sind, so dass vom Sender ausgesandtes und vom Fluid reflektiertes Licht vom Empfänger detektiert werden kann. In der DE 19 51 009 B2 ist eine Vorrichtung zum Bestimmen des Feststoffgehalts in einem Fluid beschrieben, bei welchem in das Fluid eingestrahltes und von Feststoffteilchen im Fluid zurückgestreutes Licht mittels einer Fotozelle empfangen wird.

Aus der US 7,659,980 B1 ist ein Trübungssensor für den Einsatz zur Messung in einem geschlossenen System bekannt, bei welchem das Untersuchungslicht durch ein Lichteintrittsfenster in den von Flüssigkeit durchströmten Raum eindringt und das Streulicht diesen durch ein Lichtaustrittsfenster wieder verlässt. Sowohl das eingestrahlte Untersuchungslicht als auch das detektierte Streulicht weisen eine schräg zur Strömungsrichtung des Fluids orientierte Richtung auf. Die DE 42 33 218 beschreibt ein Trübungsmessgerät zum Einsatz in einem Volumenstrom. Das Trübungsmessgerät wird in die Strömung gehalten, wobei Quelle und Detektor an einer schrägen Endplatte positioniert sind. Die EP 0 980 046 A1 beschreibt eine Messeinrichtung zur Ermittlung von physikalischen und/oder chemischen Eigenschaften von Gasen, Flüssigkeiten und/oder Feststoffen, die mit einer mit einem Sensor über ein Kommunikationsmedium gekoppelten Recheneinheit versehen ist.

### Aufgabe der vorliegenden Erfindung

Die Aufgabe der vorliegenden Erfindung besteht darin, einen neuartigen Trübungssensor mit verbesserter Leistungsfähigkeit bei vergrößertem Anwendungsbereich zur Verfügung zu stellen.

### Lösung der Aufgabe

Die vorstehende Aufgabe wird bei dem Trübungssensor gemäß dem Oberbegriff des Anspruchs 1 dadurch gelöst, dass die Lichtquelle sich innerhalb des von Flüssigkeit durchströmbaren Raums befindet und eine Mehrzahl von Photoempfängern vorgesehen ist, dass ferner die Lichtquelle innerhalb des von Flüssigkeit durchströmbaren Raums derart orientiert ist, dass deren Lichtstrahl parallel zur Fluidströmung, insbesondere entgegen der Strömungsrichtung, gerichtet ist und dass die Photoempfänger senkrecht zur Strömungsrichtung bzw. zur Hauptrichtung des Lichtstrahls positioniert sind. Die Erfindung hat den Vorteil, dass mit zunehmender Nennweite des von Fluid durchströmten Querschnitts sich der zurückgelegte Weg des Lichtes um Δd/2 anstatt wie beim Vierstrahl-Wechselllichtverfahren, um Δd erhöht, wobei d der Durchmesser des durchströmten Raums darstellt. Daraus resultiert, dass die für das Licht benötigte Energie reduziert werden kann und die Betriebsdauer der Batterie somit verlängert werden kann. Ferner kann der erfindungsgemäße Trübungssensor auch bei größeren Nennweiten eingesetzt werden. Außerdem kann der erfindungsgemäße Trübungssensor konstruktionsbedingt besonders gut für Inline-Anwendungen verwendet werden. Da die Auswertung des 90°-Streulichts erfolgt, ergibt sich der Vorteil, dass die für den Messbereich < 1 NTU benötigte Information nahezu ausschließlich im 90°-Streulichtsignal enthalten ist.

Zweckmäßigerweise befindet sich die Lichtquelle in der Mitte des von Flüssigkeit durchströmbaren Raums.

Der von Flüssigkeit durchströmbare Raum ist vorzugsweise länglich orientiert. Er weist beispielsweise Rohrform auf. Hierdurch ergibt sich eine besonders gute Einsatzmöglichkeit als Inline-Installation.

Zur Gewährleistung des mit Flüssigkeit befüllbaren Raums kann zweckmäßigerweise ein ein- oder auch mehrteiliges, vorzugsweise rohrförmiges, Mantelstück vorgesehen sein. Das Mantelstück muss für die Wellenlänge des verwendeten Lichts transparent sein, zumindest im Bereich des außenseitig angeordneten Photodetektors.

Vorzugsweise sind die Photoempfänger entlang des außenseitigen Umfangs des mit Flüssigkeit befüllten Raums oder eines Abschnitts davon herum positioniert. Die Photoempfänger sind hierbei vorzugsweise nach Art eines gleichbleibenden Rasters verteilt. Aufgrund dieser radial um das Messvolumen herum angeordneten Vielzahl von Photoempfängern zeichnen letztere das 90°-Streulicht aus unterschiedlichen Blickwinkeln auf, wodurch ein zum Messvolumen zugehöriges Streulichtprofil erstellt werden kann. Die Abstände der einzelnen Photoempfänger sind vorzugsweise konstant festgelegt, wodurch unabhängig vom eingekoppelten Lichtsignal zu jeder Zeit eine echte Differenzbildung erfolgen kann. Durch die Signalauswertung kann mit den vorhandenen Informationen aus allen Photoempfängern die Empfindlichkeit des Trübungssensors erhöht, Messfehler reduziert, die Detektion von Luftblasen erleichtert und eine Korngrößenabhängigkeit vermindert werden. Es können
exaktere Messwerte, insbesondere in dem für Trinkwasser benötigten Messbereich, erzielt werden.

Dadurch, dass zusätzlich ein Referenz-Photoempfänger vorzugsweise unmittelbar an der Lichtquelle, insbesondere senkrecht zur Richtung des Lichtstrahls positioniert, vorgesehen ist, können die von der Lichtquelle abgegebenen Lichtintensitäten erfasst und Alterungseffekte der Lichtquelle beim Betrieb des Trübungssensors mit einbezogen werden.

Vorteilhaft ist es, wenn der Lichtquelle ein optisches Element zur Erzeugung eines weitgehend parallelen Strahlengangs vorgesetzt wird. Bei einem solchen optischen Element handelt es sich vorzugsweise um eine asphärische Kollimatorlinse.

Zusätzlich kann, vorzugsweise stromabwärts zur Lichtquelle, ein weiterer Photoempfänger am Außenumfang angeordnet sein, der in einem schrägen Winkel α zur Längsachse des Trübungssensors ausgerichtet ist. Dieser Photoempfänger dient zur Erfassung des gestreuten Lichts im Winkel α. Hierdurch kann der Messbereich erweitert werden und so das beispielsweise in der Praxis nach Wartungsarbeiten auftretende "braune Wasser" detektiert werden.

Vorzugsweise werden als Lichtquelle Infrarot-Leuchtdioden (IR-LED) eingesetzt. Diese weisen üblicherweise eine in die Leuchtdiode integrierte Optik auf (Primäroptik des LED) Der sehr kleine Abstrahlwinkel solcher Leuchtdioden erleichtert die Weiterverarbeitung des Lichtes mit einem vorgesetzten optischen Element (Sekundäroptik). Die IR-LED weist eine sehr geringe Streulichtintensität auf und zeichnet sich durch eine geringe Stromaufnahme aus.

Vorteilhafterweise wird die Lichtquelle gepulst betrieben. Der gepulste Betrieb der Lichtquelle sorgt ebenfalls für eine Reduzierung des Stromverbrauchs und damit für eine Reduzierung der Belastung der Batterie. Zudem kann die Ansteuerung und Spannungsversorgung der Lichtquelle von einem Mikroprozessor übernommen werden. Daraus resultiert wiederum der Vorteil, dass gegebenenfalls bereits vorhandene Mikroprozessoren, beispielsweise derjenigen des Elektronikmoduls eines Fluidzählers, um eine erweiterte Funktionalität ausgestattet werden kann.

Die vorliegende Erfindung betrifft darüber hinaus auch einen Durchflusszähler für Fluid, insbesondere für Wasser, gemäß dem Oberbegriff des Anspruchs 14. Erfindungsgemäß ist ein entsprechender Durchflusszähler mit einem Trübungssensor gemäß mindestens einem der Anspruche 1 bis 13 ausgestattet.

Da sich der Trübungssensor bauartbedingt besonders für einen Inline-Einsatz eignet, kann der Trübungssensor gleichzeitig Bestandteil des Messkanals des Durchflusszählers sein oder aber innerhalb des Gehäuses des Durchflusszählers beispielsweise als Tauchrohr eingesetzt werden. Die Ansteuerung der Lichtquelle des Trübungssensors sowie die Signalerfassung über die einzelnen Photoempfänger können über ein gemeinsames Elektronikmodul erfolgen.

### Beschreibung der Erfindung anhand von Ausführungsbeispielen

Nachstehend werden zweckmäßige Ausgestaltungen der vorliegenden Erfindung anhand von Zeichnungsfiguren näher erläutert. Es zeigen:
- Fig. 1: eine stark vereinfachte schematische Darstellung einer Ausgestaltung des erfindungsgemäßen Trübungssensors in Schnittdarstellung;
- Fig. 2: eine Ansicht der Vorderseite des Trübungssensors nach Fig. 1 aus der Blickrichtung des Fluideinlaufs;
- Fig. 3: eine Außenansicht des Trübungssensors gemäß der Ausgestaltung nach Fig. 1 bzw. 2 in stark vereinfachter schematischer Darstellungsweise;
- Fig. 4: einen Durchflusszähler gemäß einer ersten Ausgestaltung unter Verwendung eines erfindungsgemäßen Trübungssensors sowie
- Fig. 5: eine weitere Ausgestaltung eines Durchflusszählers unter Verwendung des erfindungsgemäßen Trübungssensors;

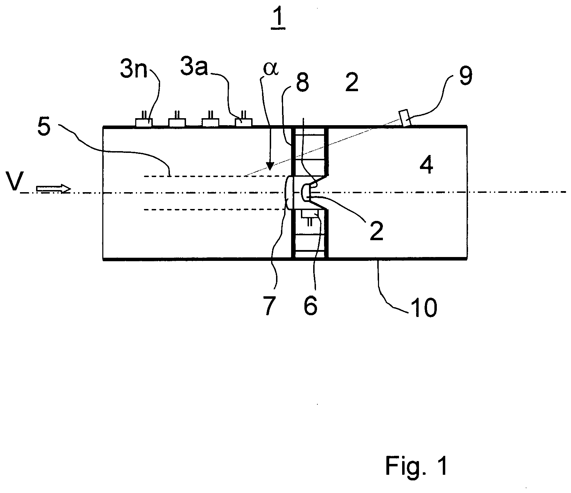

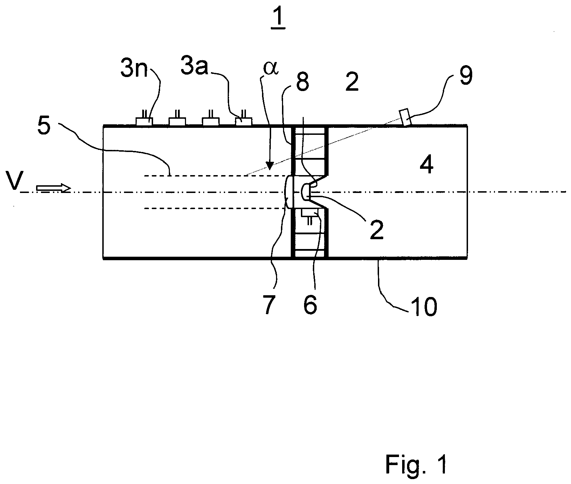

Bezugsziffer 1 in Fig. 1 bezeichnet einen Trübungssensor gemäß einer zweckmäßigen Ausgestaltung der vorliegenden Erfindung. Der Trübungssensor 1 umfasst ein rohrförmiges Mantelstück 10 mit langgezogener Form, welches einen Raum 4 begrenzt, der von einem Fluid, insbesondere Wasser, durchströmbar ist. In Fig. 1 ist der Volumenstrom V des Fluids derart dargestellt, dass er von der linken Seite in den Trübungssensor 1 eintritt und an der rechten Seite desselben wieder austritt. Eine entgegengesetzte Fließrichtung ist aber ebenso möglich.

Der Trübungssensor 1 umfasst eine Lichtquelle 2, beispielsweise in Form einer LED, welche - vorzugsweise in der Mittelachse des Mantelstücks 10 - derart positioniert ist, dass die Richtung des Lichtstrahls 5 in Längsrichtung der Längsachse des Mantelstücks 10, entgegen der Fließrichtung des Fluids, orientiert ist (eine Orientierung in Fließrichtung ist jedoch auch möglich). Zusätzlich ist ein optisches Element 7 insbesondere in Form einer asphärische Kollimatorlinse der Lichtquelle 2, ebenfalls auf der Mittelachse des Mantelstücks 10 positioniert, vorgesetzt. Das optische Element 7 bewirkt, dass der von der Lichtquelle 2 erzeugte, noch leicht divergierende Lichtstrahl entlang der Längsachse des Trübungssensors 1 parallel verläuft.

Bei der Lichtquelle 2 handelt es sich zweckmäßigerweise um eine sogenannte Infrarot-Leuchtdiode (IR-LED) z. B. mit einer Spitzenwellenlänge von λ = 870 nm und einer zugehörigen spektralen Bandbreite von Δλ = 40 nm, bei einem Abstrahlwinkel von lediglich 10°. Eine derartige Lichtquelle bewirkt eine hohe Strahlungsintensität in Verbindung mit einer geringen Stromaufnahme. Der kleine Abstrahlwinkel erleichtert die Weiterverarbeitung des Lichtstrahls mittels des optischen Elements 7.

An der Außenseite des Mantelstücks 10 befinden sich eine Vielzahl von in gleichem Abstand zueinander angeordneter Photoempfänger 3a - 3n, die alle in rechtem Winkel zur Abstrahlrichtung der Leuchtquelle 2 bzw. des parallelen Lichtstrahls 5 angeordnet sind. Die Photoempfänger 3a - 3n dienen dazu, ein sogenanntes 90°-Streulichtsignal zu empfangen. Die Abstände der einzelnen Photoempfänger 3a, 3n werden fest vorgegeben und bei der Auswertung mit einbezogen. Vorzugsweise sind die Abstände identisch. Durch die beschriebene Anordnung kann, unabhängig vom eingekoppelten Lichtsignal, zu jeder Zeit eine echte Differenzbildung erfolgen.

Durch die Vielzahl der Photoempfänger 3a - 3n kann ein zum Messvolumen zugehöriges Streulichtprofil erstellt werden kann. Bei den Photoempfängern 3a - 3n handelt es sich zweckmäßigerweise um Photodioden.

Ein weiterer Photoempfänger 6 ist unmittelbar an der Lichtquelle 2 angeordnet. Er dient dazu, die von der Lichtquelle 2 abgegebenen Lichtintensitäten zu erfassen. Die sich daraus ergebenen Werte können zur Überprüfung und Überwachung von Alterungseffekten der Lichtquelle 2 herangezogen werden. Der Photoempfänger 6 ist vorzugsweise in Querrichtung zur Längsachse des Mantelstücks 10 orientiert.

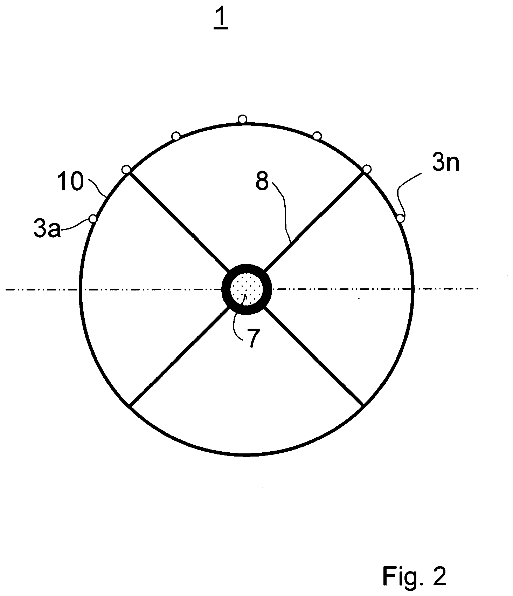

Das optische Element 7 und/oder die Lichtquelle 2 werden von einer Halterung 8 getragen. Diese bedingt, wie aus Fig. 2 ersichtlich, sehr geringe Anströmquerschnitte, sodass ein möglichst ungestörter Durchfluss von Fluid gewährleistet ist. Das optische Element 7, insbesondere in Form der asphärischen Kollimatorlinse, bedingt eine Platzersparnis, eine vereinfachte Konstruktion der Halterung 8 und günstige hydrodynamische Verhältnisse.

Stromabwärts befindet sich ein weiterer Photoempfänger 9 an der Außenseite des Mantelstücks 10 mit einer Ausrichtung in schrägem Winkel α zur Längsachse des Trübungssensors 1. Dieser in dem Winkel α außen angebrachte Photoempfänger 9 dient zum Erfassen des gestreuten Lichts in dem Winkel α. Hierdurch kann der Messbereich in der Trübungsskala erweitert werden, so dass beispielsweise die in der Praxis auftretenden Fälle von "braunem Wasser" nach Wartungsarbeiten zusätzlich detektiert werden können.

Dieser weitere Photoempfänger 9 kann natürlich auch stromaufwärts von der Lichtquelle 2 angebracht sein, wenn der Lichtstrahl 5 der Lichtquelle 2 in Fließrichtung des Fluids orientiert ist (wenn also die Fließrichtung entgegen der in Fig. 1 gezeigten Fließrichtung ist).

Mit zunehmender Nennweite des Mantelstücks 10 erhöht sich aufgrund der konstruktiven Ausgestaltung des erfindungsgemäßen Trübungssensors der zurückgelegte Weg des Lichts lediglich um Δd/2 anstatt, wie bei dem 4-Strahlwechsellichtverfahren, um Δd. Damit kann die erforderliche Energiezufuhr für die Lichtquelle reduziert werden. Die erforderliche Anzahl der benötigten Photoempfänger 3a - 3n ist abhängig von der gewünschten Genauigkeit.

Wie aus Fig. 2 deutlich wird, bewirkt die erfindungsgemäße Konstruktion in vorteilhafter Weise keine wesentliche Beeinträchtigung des Durchflussquerschnitts des Trübungssensors 1. Die Halterung 8 insbesondere in Form mehrerer Haltestreben trägt das optische Element 7 und/oder die (in Fig. 2 nicht dargestellte) Lichtquelle 2. Die Ansteuersowie Signalleitungen für die Lichtquelle 2 können in vorteilhafter Weise auch entlang der Streben der Halterung 8 nach außen geführt werden. Die Anordnung bestehend aus Mantelstück 10 sowie Halterung 8 kann einteilig oder mehrteilig ausgebildet sein. Zweckmäßigerweise kann diese Anordnung auch zweiteilig ausgebildet sein, beispielsweise in Form einer entlang einer in Längsrichtung durch den Mittelpunkt verlaufenden Trennebene zur Erzeugung zweier Halbschalen. Entsprechend kann auch nur die Haltung aus zwei Halbschalen bestehen.

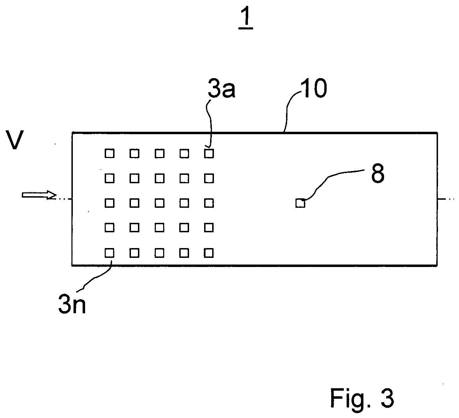

Fig. 3 zeigt einen Teilbereich der Oberfläche des Mantelstücks 10, auf dem eine rasterartige Anordnung einzelner Photoempfänger 3 in gleichem Abstand zueinander dargestellt ist. Der Photoempfänger 8 für die Winkelmessung ist, wie in Fig. 1 dargestellt, in einem schrägen Winkel α zur Längsachse des Trübungssensors 1 ausgerichtet.

Die Lichtquelle 2, zum Beispiel eine IR-LED, wird gepulst betrieben und gewährleistet einen nahezu linearen Zusammenhang zwischen abgegebener Strahlungsleistung und durchflossenem Strom. Dies ist ein Charakteristikum für die stromgesteuerte IR-LED als Halbleiterbauelement. Die Ansteuerung sowie Spannungsversorgung der Lichtquelle wird zweckmäßigerweise von einem, in den Figuren 1-3 nicht dargestellten, Mikroprozessor übernommen. Das von der Lichtquelle, z. B. der IR-LED, abgegebene Licht verhält sich linear zum LED-Strom.

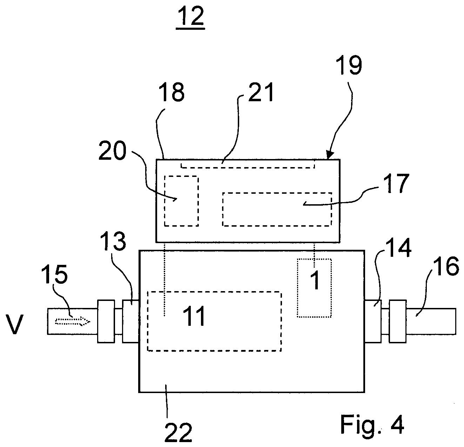

Fig. 4 zeigt, in stark vereinfachter schematischer Darstellungsweise, einen Durchflusszähler für Fluid, welcher mit einem schematisch angedeuteten Fluidnetz in einer Inline-Verbindung steht. Das Fluidnetz weist einen Netzzulauf 15 sowie einen Netzablauf 16 auf. Dazwischen ist der Durchflusszähler 12 eingesetzt und zwar über einen Zulaufanschluss 13 sowie Ablaufanschluss 14. Der Durchflusszähler umfasst entweder einen Messraum 11 zur Erfassung der Durchflussmenge auf der Grundlage eines mechanischen Prinzips (Flügelrad) oder auf der Grundlage eines physikalischen Prinzips (Ultraschallmessstrecke).

Das den Messraum 11 umfassende Gehäuse ist das Anschlussgehäuse 22. Innerhalb dieses Anschlussgehäuses befindet sich ein Trübungssensor 1 der vorher beschriebenen Art. Dieser kann gemäß der Ausgestaltung nach Fig. 4 als Tauchrohr in das Fluidvolumen im Anschlussgehäuse 22 eingesetzt sein. An der Oberseite des Anschlussgehäuses 22 befindet sich ein Elektronikmodul 19 mit einem eigenen Gehäuse 18, in dem sich der Mikroprozessor 17, die Batterie 12 sowie ggf. ein Anzeigedisplay 21 befinden. Die Ansteuerung der Lichtquelle 2 des Trübungssensors 1 erfolgt über das Elektronikmodul 19, d.h. über den dort befindlichen Mikroprozessor 17. Entsprechend erfolgt auch die Energieversorgung des Trübungssensors 1 über die im Elektronikmodul 19 befindliche Batterie 20.

Trübungsgrade sowie weitere mit der Trübungsmessung zusammenhängende Informationen können über das Anzeigedisplay 21 ausgegeben werden. Ebenso ist es möglich, entsprechende Informationen auch einer (nicht dargestellten) Fernauslesung oder einer entsprechender Schnittstelle zuzuführen.

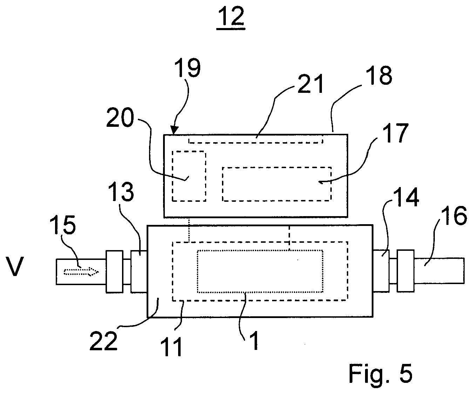

Die Ausgestaltung gemäß Fig. 5 unterscheidet sich von der gemäß Fig. 4 dadurch, dass der Trübungssensor 1 integraler Bestandteil des Messrohrs bzw. des Messraums 11 ist. In dem Messraum 11, in dem die Erfassung der Durchflussmenge stattfindet, wird somit auch die Trübung des durchfliesenden Fluids erfasst. Die Ansteuerung sowie Energiezufuhr entspricht derjenigen gemäß der Ausgestaltung nach Fig. 4.

Der erfindungsgemäße Trübungssensor kann als einzelner Trübungssensor für Trinkwasser, als Teilsystem einer Wasseranalytikeinheit oder integriert in einem Wasserzähler eingesetzt werden. Die besondere Konstruktion des Trübungssensors gemäß der vorliegenden Erfindung ermöglicht es, diesen bzw. Funktionsteile von diesem an bereits Bauart bedingten Halterungen bzw. Aufhängungen auf der Rohrleitungsachse zu integrieren.

### BEZUGSZEICHENLISTE

- 1: Trübungssensor
- 2: Lichtquelle
- 3: Photodetektor
- 4: Raum
- 5: Lichtstrahl
- 6: Photodetektor (Referenz)
- 7: optisches Element
- 8: Halterung
- 9: Photodetektor (Winkelmessung)
- 10: Mantelstück
- 11: Messraum (Fluiddurchflusszähler)
- 12: Fluiddurchflusszähler
- 13: Anschluss (Zulauf)
- 14: Anschluss (Ablauf)
- 15: Netz (Zulauf)
- 16: Netz (Ablauf)
- 17: Mikroprozessor
- 18: Gehäuse
- 19: Elektronikmodul
- 20: Batterie

## Patentansprüche

1. Trübungssensor für den Einsatz zur Messung in einem von Flüssigkeit durchflossenen System, basierend auf dem nephelometrischen Konzept, umfassend
mindestens eine Lichtquelle (2),
mindestens einen Photoempfänger (3) zum Empfang von Streulicht,
einen von Flüssigkeit durchströmbaren, von einem Mantelstück festgelegten Raum (4), in dem aufgrund der Eigenschaft und/oder Beschaffenheit der Flüssigkeit eine Streuung des von der Lichtquelle (2) ausgesendeten Lichts erfolgt, das Streulicht vom Photoempfänger (3) detektierbar ist und dessen Empfangssignale einer Auswerteschaltung zuführbar sind, wobei die Lichtquelle (2) innerhalb des von Flüssigkeit durchströmbaren Raums (4) gehalten wird **dadurch gekennzeichnet, dass** die Lichtquelle (2) in dem Raum (4) derart orientiert ist, dass deren Lichtstrahl (5) parallel zur Fluidströmung, insbesondere entgegen der Strömungsrichtung, gerichtet ist und eine Mehrzahl von Photoempfängern (3) zum Empfang von Streulicht vorgesehen ist und die Photoempfänger (3) senkrecht zur Richtung des Lichtstrahls (5) positioniert sind.

2. Trübungssensor nach Anspruch 1,
**dadurch gekennzeichnet, dass**
die Lichtquelle (2) sich in der Mitte des von Flüssigkeit durchströmbaren Raums (4) befindet.

3. Trübungssensor nach Anspruch 1 oder 2,
**dadurch gekennzeichnet, dass**
der von Flüssigkeit durchströmbare Raum (4) länglich orientiert ist,

4. Trübungssensor nach mindestens einem der vorhergehenden Ansprüche,
**dadurch gekennzeichnet, dass**
der mit Flüssigkeit befüllbare Raum (4) durch ein ein- oder mehrteiliges Mantelstück (10) festgelegt ist.

5. Trübungssensor nach mindestens einem der vorhergehenden Ansprüche,
**dadurch gekennzeichnet, dass**
die Mehrzahl von Photoempfängern (3) vorzugsweise rasterartig verteilt, zumindest über einen Teilbereich, entlang des Umfangs des mit Flüssigkeit befüllbaren Raums (4) herum positioniert sind.

6. Trübungssensor nach mindestens einem der vorhergehenden Ansprüche,
**dadurch gekennzeichnet, dass**
zusätzlich ein Referenz-Photoempfänger (6) an der Lichtquelle (2), vorzugsweise senkrecht zur Richtung des Lichtstrahls (5) positioniert, angeordnet ist.

7. Trübungssensor nach mindestens einem der vorhergehenden Ansprüche,
**dadurch gekennzeichnet, dass**
der Lichtquelle (2) ein optisches Element (7) vorgesetzt ist.

8. Trübungssensor nach Anspruch 6,
**dadurch gekennzeichnet, dass**
mittels der Lichtquelle (2) und dem optischen Element (7) ein paralleler Strahlengang erzeugbar ist.

9. Trübungssensor nach mindestens einem der vorhergehenden Ansprüche,
**dadurch gekennzeichnet, dass**
mindestens ein weiterer Photoempfänger (9) in einem schrägen Winkel (α) zur Richtung des Lichtstrahls (5) angeordnet ist

10. Trübungssensor nach Anspruch 9,
**dadurch gekennzeichnet, dass**
der Photoempfänger (9) bezogen auf die Lage der Lichtquelle (2) stromabwärts angeordnet ist.

11. Trübungssensor nach mindestens einem der vorhergehenden Ansprüche,
**dadurch gekennzeichnet, dass**
als Lichtquelle ein IR-LED vorgesehen ist.

12. Trübungssensor nach mindestens einem der vorhergehenden Ansprüche,
**dadurch gekennzeichnet, dass**
die Lichtquelle (2) gepulst betreibbar ist.

13. Trübungssensor nach mindestens einem der vorhergehenden Ansprüche,
**dadurch gekennzeichnet, dass**
die Ansteuerung der Lichtquelle (2) über einen Mikroprozessor (17) erfolgt.

14. Durchflusszähler (12) für Fluid, insbesondere Wasser, umfassend
ein Gehäuse (18),
Anschlüsse (13, 14) zum Anschluss des Gehäuse (18) an ein Fluidleitungsnetz, insbesondere an ein Wasserversorgungsnetz,
einen im Gehäuse (18) befindlichen Messraum (11), in dem die Erfassung der Durchflussmenge stattfindet,
ein Elektronikmodul (19) zur Weiterverarbeitung der Messwerte des Durchflusszählers
**dadurch gekennzeichnet, dass**
der Durchflusszähler (12) zusätzlich einen Trübungssensor (1) gemäß mindestens einem der vorhergehenden Ansprüche aufweist.

15. Durchflusszähler nach Anspruch 14,
**dadurch gekennzeichnet, dass**
der Trübungssensors (1) sich am oder im Messraum (11) befindet.

16. Durchflusszähler nach Anspruch 14,
**dadurch gekennzeichnet, dass**
der Trübungssensor (1) am Durchflusszähler als Tauchrohr angeordnet ist.

## Claims

1. Turbidity sensor for measuring in a system through which liquid flows, based on the nephelometric concept, comprising
at least one light source (2),
at least one photoreceiver (3) for receiving scattered light,
a space (4) which is defined by a jacket part and through which liquid can flow, in which space (4) light emitted by the light source (2) is scattered due to the property and/or characteristic of the liquid, the scattered light is detectable by the photoreceiver (3), and the reception signals of which can be supplied to an evaluation circuit,
wherein the light source (2) is held within the space (4) through which liquid can flow,
**characterized in that**
the light source (2) is oriented in the space (4) such that the light beam (5) thereof is directed parallel to the liquid flow, in particular counter to the flow direction, and
a plurality of photoreceivers (3) for receiving scattered light are provided and
the photoreceivers (3) are positioned perpendicular to the direction of the light.

2. Turbidity sensor according to Claim 1,
**characterized in that** the light source (2) is situated in the centre of the space (4) through which liquid can flow.

3. Turbidity sensor according to Claim 1 or 2,
**characterized in that** the space (4) through which liquid can flow is oriented longitudinally.

4. Turbidity sensor according to at least one of the preceding claims, **characterized in that** the space (4) which can be filled with liquid is defined by a one-piece or multi-piece jacket part (10).

5. Turbidity sensor according to at least one of the preceding claims, **characterized in that** the plurality of photoreceivers (3) are positioned such that they are distributed preferably in the manner of a grid, at least over a partial region, along the perimeter of the space (4) which can be filled with liquid.

6. Turbidity sensor according to at least one of the preceding claims, **characterized in that** in addition a reference photoreceiver (6) is arranged at the light source (2), preferably positioned perpendicular to the direction of the light beam (5).

7. Turbidity sensor according to at least one of the preceding claims, **characterized in that** an optical element (7) is placed in front of the light source (2).

8. Turbidity sensor according to Claim 6,
**characterized in that** a parallel beam path can be produced using the light source (2) and the optical element (7).

9. Turbidity sensor according to at least one of the preceding claims, **characterized in that** at least one further photoreceiver (9) is arranged at an oblique angle (α) with respect to the direction of the light beam (5).

10. Turbidity sensor according to Claim 9,
**characterized in that** the photoreceiver (9) is arranged downstream with respect to the location of the light source (2).

11. Turbidity sensor according to at least one of the preceding claims, **characterized in that** an IR LED is provided as the light source.

12. Turbidity sensor according to at least one of the preceding claims, **characterized in that** the light source (2) can be operated in pulsed fashion.

13. Turbidity sensor according to at least one of the preceding claims, **characterized in that** the driving of the light source (2) is effected via a microprocessor (17).

14. Volumetric flow meter (12) for fluid, in particular water, comprising
a housing (18),
connections (13, 14) for connecting the housing (18) to a fluid distribution network, in particular to a water supply network,
a measurement space (11) which is situated in the housing (18) and in which the capturing of the flowrate takes place,
an electronics module (19) for further processing the measurement values of the volumetric flow meter,
**characterized in that**
the volumetric flow meter (12) additionally has a turbidity sensor (1) according to at least one of the preceding claims.

15. Volumetric flow meter according to Claim 14,
**characterized in that** the turbidity sensor (1) is situated at or in the measurement space (11).

16. Volumetric flow meter according to Claim 14,
**characterized in that** the turbidity sensor (1) is arranged at the volumetric flow meter as an immersion tube.

## Revendications

1. Capteur de turbidité destiné à être utilisé dans la mesure d'un système traversé par un liquide et travaillant par néphélométrie, comportant
au moins une source de lumière (2),
au moins un photorécepteur (3) qui reçoit de la lumière diffuse,
un espace (4) traversé par le liquide et défini par une pièce d'enveloppe, dans lequel une diffusion de la lumière émise par la source de lumière (2) a lieu sur la base de la propriété et/ou de la nature du liquide, la lumière diffuse pouvant être détectée par le photorécepteur (3) dont les signaux reçus peuvent être envoyés à un circuit d'évaluation,
la source de lumière (2) étant maintenue à l'intérieur de l'espace (4) apte à être traversé par le liquide,
**caractérisé en ce que**
la source de lumière (2) est orientée dans l'espace (4) de telle sorte que son faisceau lumineux (5) est orienté parallèlement à l'écoulement du fluide et en particulier en opposition à la direction d'écoulement et
**en ce que** plusieurs photorécepteurs (3) sont prévus pour recevoir la lumière diffuse, les photorécepteurs (3) étant disposés perpendiculairement à la direction du faisceau lumineux.

2. Capteur de turbidité selon la revendication 1,
**caractérisé en ce que** la source de lumière (6) est située au milieu de l'espace (4) apte à être traversé par le liquide.

3. Capteur de turbidité selon les revendications 1 ou 2, **caractérisé en ce que** l'espace (4) apte à être traversé par le liquide est orienté longitudinalement.

4. Capteur de turbidité selon au moins l'une des revendications précédentes, **caractérisé en ce que** l'espace (4) apte à être rempli de liquide est défini par une pièce d'enveloppe (10) en une ou plusieurs pièces.

5. Capteur de turbidité selon au moins l'une des revendications précédentes, **caractérisé en ce que** les différents photorécepteurs (3) sont répartis de préférence en trames au moins sur une partie de la périphérie de l'espace (4) apte à être rempli par le liquide.

6. Capteur de turbidité selon au moins l'une des revendications précédentes, **caractérisé en ce qu'**en supplément, un photorécepteur de référence (6) est disposé sur la source de lumière (2), de préférence perpendiculairement à la direction du faisceau lumineux (5).

7. Capteur de turbidité selon au moins l'une des revendications précédentes, **caractérisé en ce que** la source de lumière (2) est précédée par un élément optique (7).

8. Capteur de turbidité selon la revendication 6,
**caractérisé en ce qu'**un parcours de rayons parallèles peut être formé au moyen de la source de lumière (2) et de l'élément optique (7).

9. Capteur de turbidité selon au moins l'une des revendications précédentes, **caractérisé en ce qu'**au moins un autre photorécepteur (9) est disposé à un angle oblique (α) par rapport à la direction du faisceau lumineux (5).

10. Capteur de turbidité selon la revendication 9,
**caractérisé en ce que** le photorécepteur (9) est disposé en aval de la position de la source de lumière (2).

11. Capteur de turbidité selon au moins l'une des revendications précédentes, **caractérisé en ce qu'**une LED IR est prévue comme source de lumière.

12. Capteur de turbidité selon au moins l'une des revendications précédentes, **caractérisé en ce que** la source de lumière (2) peut être utilisée de manière pulsée.

13. Capteur de turbidité selon au moins l'une des revendications précédentes, **caractérisé en ce que** la commande de la source de lumière (2) s'effectue par l'intermédiaire d'un microprocesseur (17).

14. Compteur de passage (12) pour fluide, en particulier pour de l'eau, comprenant
un boîtier (18),
des raccords (13, 14) permettant de raccorder le boîtier (18) à un réseau de conduits de fluide, en particulier un réseau d'alimentation en eau,
un espace de mesure (11) situé dans le boîtier (18) et dans lequel a lieu la saisie du débit de passage,
un module électronique (19) qui poursuit le traitement des valeurs de mesure du compteur de passage,
**caractérisé en ce que**
le compteur de passage (12) présente en outre un capteur de turbidité (1) selon au moins l'une des revendications précédentes.

15. Compteur de passage selon la revendication 14,
**caractérisé en ce que** le capteur de turbidité (1) est situé sur ou dans l'espace de mesure (11).

16. Compteur de passage selon la revendication 14,
**caractérisé en ce que** le capteur de turbidité (1) est disposé sur le compteur de passage sous la forme d'un tube immergé.
